# EUROPEAN PATENT APPLICATION

(11) **EP 2 858 071 A1**
(43) Date of publication of application: **08.04.2015**
(21) Application number: 13801442.8
(22) Date of filing: 30.05.2013
(51) Int. Cl.: G21B 3/00, G21B 1/00

(54) **ROOM-TEMPERATURE FUSION REACTION METHOD AND DEVICE**

(30) Priority: 05.06.2012 JP 2012127681; 05.02.2013 JP 2013033833
(71) Applicant: IDEA RESEARCH LTD., Yasu-shi Shiga 5202321 (JP)
(72) Inventor:
(74) Representative: Wagner, Karl H.
(86) International application number: PCT/JP2013/064985
(87) International publication number: WO 2013/183527

(57) **Abstract**

[Problem] To provide a room-temperature fusion reaction device capable of maintaining a room-temperature fusion reaction state by controlling the reaction condition of room-temperature fusion.

[Solution] The room-temperature fusion reaction device comprises: a reaction vessel 13A for containing an electrolyte solution 20; a positive electrode 22 and a negative electrode 24 immersed in the electrolyte solution 20 within the reaction vessel 13A; and a power supply device 102 for applying a reaction voltage to the positive electrode 22 and the negative electrode 24. The reaction voltage from the power supply device 102 is applied to generate glow discharge optical emission between the positive electrode 22 and the negative electrode 24. A light receiving means 68A is provided for receiving light of the glow discharge optical emission. A voltage adjusting means 106 of the power supply device 102 controls the reaction voltage applied to the positive electrode 22 and the negative electrode 24 based on the receiver output of the light receiving means 68A.

## Description

### TECHNICAL FIELD

The present invention relates to a room-temperature fusion reaction method and device for causing a fusion reaction at room temperature.

### BACKGROUND

There has been known that a fusion reaction occurs in the sun and that the earth receives energy generated by the fusion (see non-patent document 1, for example). Also, there has been known a method of causing a fusion reaction at room temperature by placing positive and negative electrodes in electrolyte solution inside a reaction vessel and applying a reaction voltage between the positive and negative electrodes to cause high-voltage electrolysis (see non-patent document 2, for example).

Non-patent document 1: Sol Wieder: "An Introduction to Solar Energy" edited by Oshide Isao (in particular, "radiant energy flow" in page 8)

Non-patent document 2: "Study of The Nuclear Reaction In The Solid No. 1" Kohgaku-Sha Co., Ltd. (in particular, Tadayoshi Omori: "Nuclear Transmutation Reactions in Metal-Lightwater electrolysis systems" page 159, chapter 7, Tadahiko Nizuno: "Heat and products induced by glow discharge in the liquid" page 219, chapter 9)

### SUMMARY

### Problems to be solved by the Invention

However, in such a room-temperature fusion reaction method, it is difficult to clearly define reaction conditions and to control a room-temperature fusion reaction, malking it unable to specify a design of a room-temperature fusion reaction device and to form such devices in larger size.

It is an object of the invention to provide room-temperature fusion reaction method and device capable of maintaining a room-temperature fusion reaction state by controlling reaction conditions of a room-temperature fusion.

It is an another object of the invention to provide room-temperature fusion reaction method and device capable of reducing the cost of facilities and stabilizing operations in the facilities by extracting high-voltage high-current electric power output in a room-temperature fusion reaction state.

### Means to solve the Problems

The room-temperature fusion reaction method of claim 1 of the invention includes placing a positive electrode and a negative electrode in an electrolyte solution within a reaction vessel, applying a reaction voltage to the positive electrode and the negative electrode to cause a glow discharge optical emission between the positive electrode and the negative electrode, receiving a light of the glow discharge optical emission by a light receiving means, and controlling the voltage based on a receiver output of the light receiving means, thereby maintaining a glow discharge optical emission state.

Also, in the room-temperature fusion reaction method of claim 2 of the invention, the light receiving means is disposed in the reaction vessel by a transparent member, and the light receiving means receives the light of the glow discharge optical emission between the positive electrode and the negative electrode through the transparent member.

Also, in the room-temperature fusion reaction method of claim 3 of the invention, a combustion burner for burning a gas, a heat utilizing means for utilizing an exhaust heat, and a combustion gas cooling means for cooling down a combustion gas are provided in relation to the reaction vessel, and a gas generated near the positive electrode or the negative electrode is led to the outside the reaction vessel and burned by the combustion burner. A combustion heat of the combustion gas is utilized by the heat utilizing means, and the combustion gas after a heat usage is cooled down by the combustion gas cooling means. A cooled and liquefied liquid is returned into the reaction vessel, and a cooled gas is collected by a gas collector.

Also, in the room-temperature fusion reaction method of claim 4 of the invention, a power-collection positive electrode and a power-collection negative electrode for collecting power are disposed near the positive electrode and the negative electrode, and an energy generated in the room-temperature fusion reaction state is extracted outside as an electric power by using the power-collection positive electrode and the power-collection negative electrode.

Also, the room-temperature fusion reaction method of claim 5 of the invention includes placing a positive electrode and a negative electrode in an electrolyte solution within a reaction vessel, placing a reference positive electrode and a reference negative electrode for detecting a voltage of the electrolyte solution near the positive electrode and the negative electrode, applying a reaction voltage to the positive electrode and the negative electrode to cause a glow discharge optical emission between the positive electrode and the negative electrode, detecting a voltage of the electrolyte solution in this glow discharge optical emission state with the reference positive electrode and the reference negative electrode, and controlling the reaction voltage based on a reference voltage between the reference positive electrode and the reference negative electrode, thereby maintaining the glow discharge optical emission state.

Also, the room-temperature fusion reaction device of claim 6 of the invention includes a reaction vessel for containing an electrolyte solution, a positive electrode and a negative electrode immersed in the electrolyte solution inside the reaction vessel, and a power-supply device for applying a reaction voltage to the positive electrode and the negative electrode. The reaction voltage from the power-supply device is applied so as to cause a glow discharge optical emission between the positive electrode and the negative electrode, and a light receiving means for receiving a light of a glow discharge optical emission state is provided. The power-supply device includes a voltage adjusting means for adjusting a voltage from a power source, the voltage adjusting means controlling the reaction voltage applied to the positive electrode and the negative electrode based on a receiver output of the light receiving means, thereby maintaining the glow discharge optical emission state between the positive electrode and the negative electrode.

Further, the room-temperature fusion reaction device of claim 7 of the invention includes a reaction vessel for containing an electrolyte solution, a positive electrode and a negative electrode immersed in the electrolyte solution inside the reaction vessel, and a power-supply device for applying a reaction voltage to the positive electrode and the negative electrode. The reaction voltage from the power-supply device is applied so as to cause a glow discharge optical emission between the positive electrode and the negative electrode, and a reference positive electrode and a reference negative electrode are disposed near the positive electrode and the negative electrode. The power-supply device includes a voltage adjusting means for adjusting a voltage from a power source, and the reference positive electrode and the reference negative electrode detects a voltage of the electrolyte solution in the glow discharge optical emission state. The voltage adjusting means controls the reaction voltage applied to the positive electrode and the negative electrode based on a reference voltage between the reference positive electrode and the reference negative electrode, thereby maintaining the glow discharge optical emission state between the positive electrode and the negative electrode.

### Effects of the Invention

According to the room-temperature fusion reaction method of claim 1 and the room-temperature fusion reaction device of claim 6 of the invention, because the reaction voltage is applied to the positive electrode and the negative electrode disposed in the electrolyte solution inside the reaction vessel to cause the glow discharge optical emission, it is possible to cause the room-temperature fusion reaction in the glow discharge optical emission state region. Also, because the light of the glow discharge optical emission is received by the light receiving means and the reaction voltage is controlled based on the receiver output of the receiving means, it is possible to maintain the glow discharge optical emission state between the positive electrode and the negative electrode, .i.e., the room-temperature fusion reaction.

For example, the glow discharge optical emission (the room-temperature fusion reaction) is strong when the receiver output of the light receiving means is large. In this case, it is controlled to lower the reaction voltage so as to weaken the glow discharge optical emission. Also, the glow discharge optical emission is relatively weak when the receiver output of the light receiving means is small. In this case, it is controlled to increase the reaction voltage in order to intensify the glow discharge optical emission. It should be noted that a solar cell may be used as the light receiving means.

Also, according to the room-temperature fusion reaction method of claim 2 of the invention, because the light receiving means disposed to the reaction vessel by the transparent member receives the light of the glow discharge optical emission state through the transparent member, the light receiving means for controlling the reaction voltage can be incorporated to the reaction vessel.

Also, according to the room-temperature fusion reaction method of claim 3 of the invention, because the combustion burner and the heat utilizing means are provided in relation to the reaction vessel, the combustion burner can burn a gas generated near the positive electrode or the negative electrode, and the heat utilizing means can use a heat energy of the combustion gas. Thus, the gas generated in the room-temperature fusion reaction can be thermally used. Also, because the combustion gas cooling means is provided in addition to the combustion burner and the heat utilizing means, it is possible to prevent deuterium, tritium, and the like from leaking to the outside by cooling the combustion gas by the combustion gas cooling means after the thermal usage, returning the cooled and liquefied liquid into the reaction vessel, and collecting the cooled gas to the gas collector.

Also, according to the room-temperature fusion reaction method of claim 4 of the invention, because the power-collection positive electrode and the power-collection negative electrode are disposed near the positive electrode and the negative electrode, the energy generated in the room-temperature fusion reaction state can be extracted outside as electric power with the power-collection positive electrode and the power-collection negative electrode.

Further, according to the room-temperature fusion reaction method of claim 5 and the room-temperature fusion reaction device of claim 7 of the invention, because the glow discharge optical emission is generated by applying the reaction voltage to the positive electrode and the negative electrode disposed in the electrolyte solution, it is possible to cause the room-temperature fusion reaction in the glow discharge optical emission state region. Also, because the voltage of the electrolyte solution in the glow discharge optical emission state is detected by using the reference positive electrode and the reference negative electrode disposed near the positive electrode and the negative electrode, and because the reaction voltage is controlled based on the reference voltage, it is possible to maintain the glow discharge optical emission state between the positive electrode and the negative electrode, i.e., the room-temperature fusion reaction.

For example, the glow discharge optical emission (that is, the room-temperature fusion reaction) is strong when the reference voltage between the reference positive electrode and the reference negative electrode. In this case, it is controlled to lower the reaction voltage so as to weaken the glow discharge optical emission. Also, the glow discharge optical emission is relatively weak when the reference voltage is small. In this case, it is controlled to increase the reaction voltage in order to intensify the glow discharge optical emission.

### BRIEF DESCRIPTION OF THE DRAWINGS

Fig. 1 is a schematic view describing the relationship between the sun and the earth.

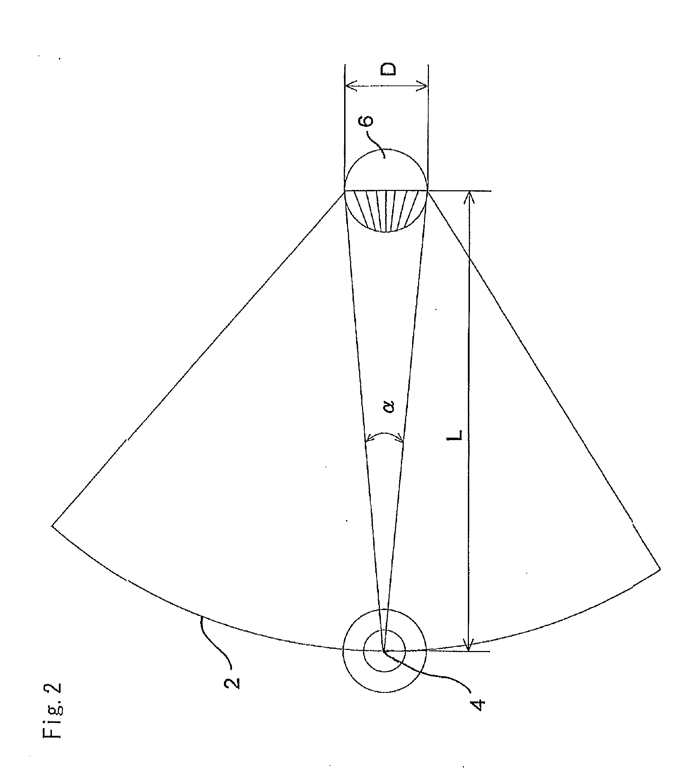

Fig. 2 is a schematic view showing the relationship between the sun and the earth with a distance therebetween converted to 10 m.
Fig. 3 is a simplified cross-sectional view of a room-temperature fusion reaction device according to an embodiment of the invention.
Fig. 4 is a simplified cross-sectional view of a room-temperature fusion reaction device according to another embodiment of the invention.
Fig. 5 shows an example of a negative electrode of the room-temperature fusion reaction device shown in Fig. 4, wherein: (a) is a plan view thereof; (b) is a front view thereof; and (c) is a side view thereof.
Fig. 6 is a simplified cross-sectional view of an example of heat utilization systems applied with the room-temperature fusion reaction device of the invention.
Fig. 7 is a simplified cross-sectional view of a room-temperature fusion reaction device according to a different embodiment of the invention.

### DETAILED DESCRIPTION

A further description will be provided while referring to the accompanying drawings. First, radiant energy and nuclear reaction will be described. Usually, a temperature of electric discharge arc at the time of electric welding is 6,000K (the absolute temperature), which is close to the surface radiation temperature of the sun. According to the Stefan-Boltzmann law, a heat quantity (electromagnetic wave energy) radiated from a surface of a black body is proportional to the fourth power of the absolute temperature (thermodynamic temperature) of the black body, and thus a heat quantity (electromagnetic wave energy) radiated from a black body at 6,000K is about 70,000 kW/m². Generally, the sun is at 5,800K (the absolute temperature), and a heat quantity (electromagnetic wave energy) radiated from the sun is about 64,000 kW/m².

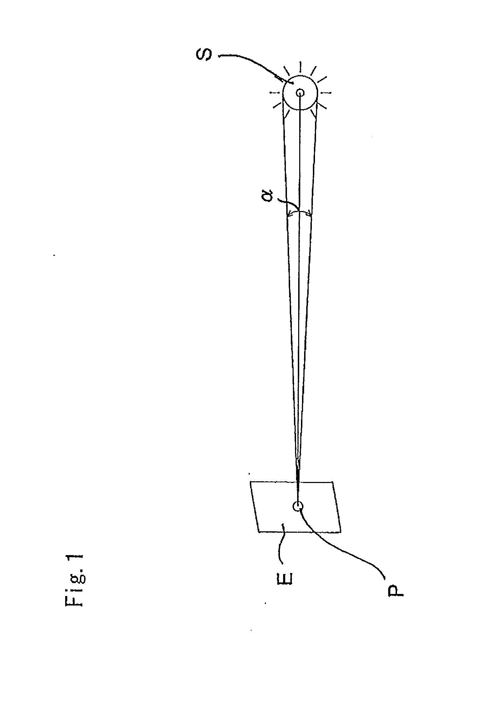

Also, as schematically shown in Fig. 1, although the sun S is located about 150 million km away from the earth E, an angular size α of the sun is about 0.53 at a light receiving point P with 1 m² on the earth E because of the enormous size of the sun S.

Converting the distance between the light receiving point P on the earth E and the sun S to L = 10 m and assuming that the angular size α = 0.53°, the diameter D of the sum comes near 92.5 mm. That is, it is approximated that the a radiation source 6 with a diameter D of 92.5 mm and a temperature (absolute temperature) of 5,800 K is located at a distance L = 10 m away from the a light-receiving section 4 on a light-receiving surface 2. Because the radiation source 6 has an area of about 677 mm², which has a ratio of about 1 to 148.9 (1/148.9) with respect to 1 m², it is approximated that the radiation source 6 with 429.8 kW and an area of 1m² is located at this location. Also, this is equivalent to that a solar cell located at 10 m generates an electric power output of 200 W/m² with respect to a solar light with a solar constant of 1 kW/m². This shows a correspondence between an output of a test electrode glow discharge optical emission with respect to 64,000 kW/m² from the radiation source 6 at 5,800K that generates energy and an electric power output (electric generation output) of the solar cell. The fusion reaction condition state can be simulated by receiving the energy of the glow discharge optical emission by the solar cell and monitoring the power generation output thereof using such a correspondence relationship.

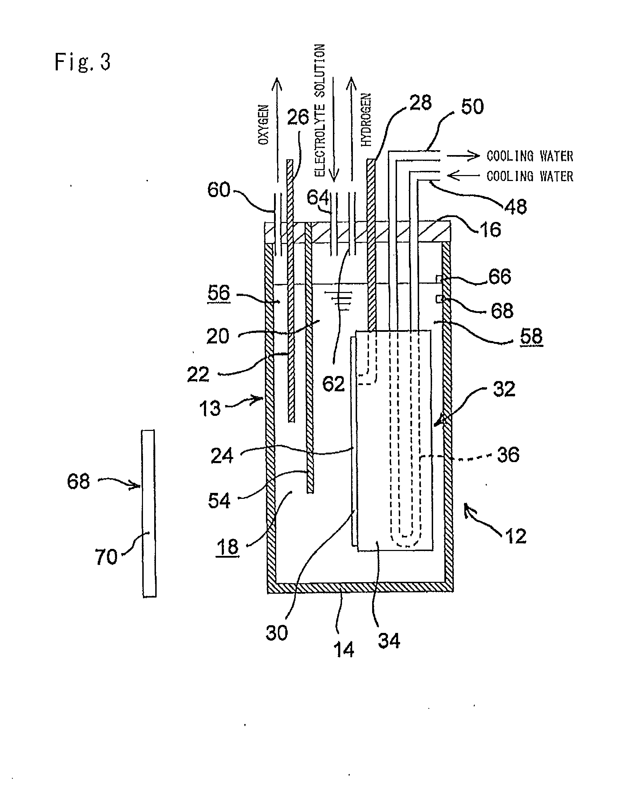

Next, a room-temperature fusion reaction device according to a first embodiment of the invention will be described with reference to Fig. 3. In Fig. 3, a room-temperature fusion reaction device 12 includes a hermetically-sealed reaction vessel 13 having a vessel main body 14 and a cover member 16. The vessel main body 14 has an open-top cylindrical shape, and the cover member 16 hermetically seals the opening of the vessel main body 14, defining an enclosed space 18 within the reaction vessel 13. The vessel main body 14 is made of transparent silica glass, for example, and has a thickness of about 3 mm, for example. The cover member 16 is made of heat resistant plastic, for example.

The reaction vessel 13 is filled with electrolyte solution 20, which may be prepared by resolving electrolytic substance (sodium carbonate : Na₂CO₃, for example) with a mixture of distilled water (95%, for example) and heavy water (5%, for example), for example.

A positive electrode 22 and a negative electrode 24 are placed in the electrolyte solution 20 within the vessel main body 14 so as to face each other with a predetermined distance therebetween. A terminal area 26 of the positive electrode 22 is electrically connected to a positive terminal side of a power-supply device (not shown), and a terminal area 28 of the negative electrode 24 is electrically connected to a negative terminal side of the power-supply device. A voltage (reaction voltage) from the power-supply device is applied between the positive electrode 22 and the negative electrode 24. In this embodiment, an electrode plane of the negative electrode 24 serves as a radiation surface 30, and a light of a glow discharge optical emission to be described later is radiated from the radiation surface 30.

An electrode cooling member 32 is provided in relation to the negative electrode 24. The electrode cooling member 32 has an electrode support member 34 made of heat resistant plastic, for example, and the negative electrode 24 is mounted on a surface of the electrode support member 34 (surface on the left side in Fig. 3). The negative electrode 24 is electrically connected to the terminal area 28 through a part of the electrode support member 34. The electrode support member 34 accommodates a cooling tube 36 with an inlet side 48 connected to a cooling liquid supply source (not shown). A cooling liquid from the cooling liquid supply source is supplied through the inlet side 48, flows through the cooling tube 36, and flows out through an outlet side 50 thereof, thereby cooling the negative electrode 24.

In this embodiment, there is disposed a separation film 54 between the positive electrode 22 and the negative electrode 24. The separation film 54 extends downward from its top end attached to the cover member 16 to a midsection inside the vessel main body 14, thereby partitioning the enclosed space 18 inside the vessel main body 14 into a first chamber 56 (i.e., space where the positive electrode 22 is located) and a second chamber 58 (i.e., space where the negative electrode 24 is located).

In a glow discharge optical emission state (i.e., room-temperature fusion reaction state) to be described later, oxygen is generated on the positive electrode 22 side and discharged outside through a first outlet tube 60 fluidly connected to the first chamber 56. Also, hydrogen (including deuterium and tritium) is generated on the negative electrode 24 side and discharged outside through a second outlet tube 62 fluidly connected to the second chamber 58.

There is also provided an electrolyte solution supply tube 64 for supplying an electrolyte solution. The electrolyte solution supply tube 64 has one end penetrating through the cover member 16 and fluidly connected to the vessel main body 14 and the other end fluidly connected to a electrolyte solution supply source (not shown) that supplies the electrolyte solution into the reaction vessel 13 through the electrolyte solution supply tube 64. The vessel main body 14 accommodates an upper level sensor 66 and a lower level sensor 68. When a liquid level of the electrolyte solution 20 inside the reaction vessel 13 is lowered to the lower level sensor 68, then the electrolyte solution is supplied through the electrolyte solution supply tube 64. When the liquid level increases to the upper level sensor 66, then the supply of the electrolyte solution 20 is stopped. In this manner, the liquid level of the electrolyte solution 20 is maintained within a predetermined level range.

In this embodiment, there is provided a light receiving means 68 in relation to the reaction vessel 13. The light receiving means 68 is formed of a solar cell 70, for example. A power generation output of the solar cell 70 is used to adjust a voltage, i.e., the reaction voltage, to be applied between the positive electrode 22 and the negative electrode 24 in a manner described later.

The room-temperature fusion reaction occurs in the room-temperature fusion reaction device 12 in the following manner. First, the power-supply device (not shown) is turned ON, and then an operation switch (not shown) is turned ON to apply the reaction voltage (voltage of 100 V to 300 V; 250 V for example) between the positive electrode 22 and the negative electrode 24. As a result, a state shifts from an electrolytic reaction of the electrolyte solution to a plasma state, and the glow discharge optical emission state occurs between the positive electrode 22 and the negative electrode 24, establishing the room-temperate fusion reaction state between the positive electrode 22 and the negative electrode 24 inside the reaction vessel 14.

At this time, the oxygen generated on the positive electrode 22 side is discharged outside the reaction vessel 14 through the first outlet tube 60, and the hydrogen generated on the negative electrode 24 side is discharged outside the reaction vessel 14 through the second outlet tube 62. Also, when the electrolyte solution 20 decreases due to energy of the glow discharge optical emission state, water is supplied into the reaction vessel 14 from a water supply source (not shown) through a water supply tube 64 based on a liquid level detection signal of the lower level sensor 68. When the electrolyte solution 20 increases as a result of this water supply, then the water supply from the water supply source (not shown) is stopped based on the liquid level detection signal from the upper level sensor 66.

Also, the energy of the glow discharge optical emission state is radiated from the radiation surface 30 of the negative electrode 24, and the light receiving means 68 receives the light from the radiation surface 30 and outputs a receiver output. The output from the radiation surface 30 of the negative electrode 24 is radiated as an ultraviolet light, a visible light, and an infrared light, and such energy is converted into electric power by the solar cell 70 serving as the light receiving means 68.

Then, based on the receiver output of the light receiving means 68, i.e., an electric output of the solar cell 70, the reaction voltage applied to the positive electrode 22 and the negative electrode 24 from the power-supply device (not shown) is controlled. When the glow discharge optical emission, i.e., the room-temperature fusion reaction, becomes more active (or less active), then the receiver output of the light receiving means 68 becomes larger (or smaller). In this case, however, controlling to decrease (or increase) the reaction voltage applied to the positive electrode 22 and the negative electrode 24 from the power-supply device (not shown) weakens (or intensifies) the glow discharge optical emission. Thus, controlling the reaction voltage in this manner makes it possible to maintain the glow discharge optical emission state, i.e., the room-temperature fusion reaction state, in a stable manner.

Such fusion reaction due to discharge reaction within the electrolyte solution inside the reaction vessel 13 is triggered by energy input from outside, but not by self-sustained reaction of fuel itself, and such fusion reaction (the glow discharge optical emission state) stops immediately upon cancellation of the energy input. Thus, the fusion reaction (the glow discharge optical emission state) stops when the operation switch (not shown) is turned OFF, realizing a high-safety level.

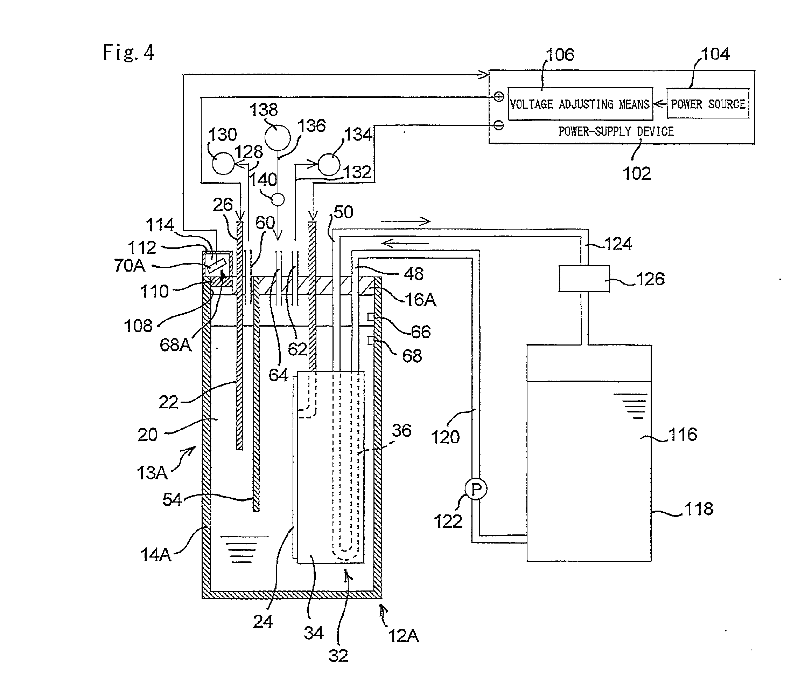

Next, a room-temperature fusion reaction device according to another embodiment of the invention will be described with reference to Fig. 4. In this embodiment, a light receiving means is incorporated in a reaction vessel, and it is shown in greater detail to some extent. It should be noted that parts that are substantially the same as those of the embodiment shown in Fig. 3 are designated with the same numberings, and explanation thereof will be omitted.

In Fig. 4, a room-temperature fusion reaction device 12A of the embodiment includes a power-supply device 102 having a direct current power source 104 and a voltage adjusting means 106 for adjusting the voltage from the direct current power source 104. The voltage adjusting means 106 has a positive-output terminal side electrically connected to the terminal area 26 of the positive electrode 22 and a negative-output terminal side electrically connected to the negative electrode 24.

In this embodiment, a vessel main body 14A of a reaction vessel 13A is formed of a metal vessel having an inner surface entirely covered with a heat resistant electrical insulation layer. Also, a cover member 16A is formed of a heat resistant electrical insulation material, such as a heat resistant plastic, for example. Using such vessel main body 14A and cover member 16A makes it possible to form the reaction vessel 13A in a larger size to obtain a larger output of the room-temperature fusion reaction device 12A.

In this embodiment, the reaction vessel 13A is incorporated with a light receiving means 68A (a solar cell 70A in this embodiment). The cover member 16A has a part formed with an opening 108 that is sealed with a transparent sealing member 110. The sealing member 110 is attached and covered with a box member 112 having an open bottom, and defines a sealed pressure resistant chamber 114 together with the box member 112. The light receiving means 68A (the solar cell 70A) is disposed in the pressure resistant chamber 114 inside the box member 112. A receiver output of the light receiving means 68A is transmitted to the voltage adjusting means 106 of the power-supply device 102, and the voltage (more specifically, the output voltage of the voltage adjusting means 106) applied to the positive electrode 22 and the negative electrode 24 from the power-supply device 102 is adjusted based on the receiver output.

Also, there is provided a cooling liquid tank 118 for storing a cooling liquid 116 in relation to the electrode cooling member 32 for cooling the negative electrode 24. The cooling liquid tank 118 has a bottom section fluidly connected to the inlet side 48 of the cooling tube 36 disposed inside the electrode cooling member 32 through a supply tube 120 (a supply line) provided with a circulation pump 122. Also, a top of the cooling liquid tank 118 is fluidly connected to the outlet side 50 of the cooling tube 36 through a return tube 124 (a return line) provided with a radiator 126 for cooling the cooling liquid. With this configuration, when the circulation pump 122 and the radiator 126 operate, the cooling liquid 116 stored in the cooling liquid tank 118 is supplied through the supply tube 120 to the cooling tube 36 of the electrode cooling member 32 and cools the negative electrode 24 while flowing through the cooling tube 36. The cooling liquid 116 flowed through the cooling tube 36 returns to the cooling liquid tank 118 through the return tube 124 and the radiator 126, and is cooled while flowing through the radiator 126.

Further, the first outlet tube 60 is fluidly connected to a first collector tank 130 through a first discharge line 128, and oxygen generated on the positive electrode 22 inside the reaction vessel 13A is collected into the first collector tank 130 through the first discharge line 128. The second outlet tube 62 is fluidly connected to a second collector tank 134 through a second discharge line 132, and hydrogen (including deuterium and tritium) generated on the negative electrode 24 inside the reaction vessel 13A is collected into the second collector tank 134 through the second discharge line 132. Also, the electrolyte solution supply tube 64 is connected to an electrolyte solution supply tank 138 (an electrolyte solution supply source) through an electrolyte solution supply line 136 provided with a supply pump 140. Thus, when the supply pump 138 operates, the electrolyte solution stored in the electrolyte supply tank 138 is supplied into the reaction vessel A through the electrolyte solution supply line 136. The rest of the configuration of the room-temperature fusion reaction device 12A of this embodiment is substantially the same as that of the embodiment shown in Fig. 3.

Because the basic configuration of the room-temperature fusion reaction device 12A of this embodiment is the same as that described above, the room-temperature fusion reaction device 12A provides the same effects as that described above, and it is possible to stabilize the glow discharge optical emission state, i.e., the room-temperature fusion reaction state, by controlling the reaction voltage applied to the positive electrode 22 and the negative electrode 24 from the power-supply device 102 (more specifically, the voltage adjusting means 106) based on the receiver output of the receiving means 68A (the solar cell 70A), enabling consecutive operation.

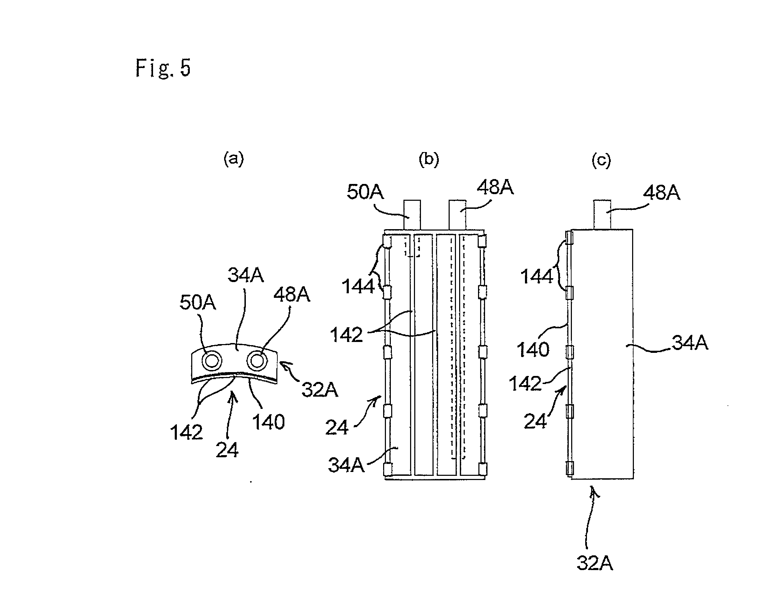

The negative electrode 24 and those related thereto may be configured as shown in Fig. 5, for example. An electrode support member 34A of an electrode support body 34A is a hermetically sealed hollow box member made of heat resistant plastic, for example. As shown in Fig. 5(b), an inlet side through which the cooling liquid 116 flows in is made of an inlet tube 48A extended inside the electrode support member 34A to a bottom, and an outlet side through which the cooling liquid 116 is discharged is made of an outlet tube 50A having one end disposed at an upper part inside the electrode support member 34A. With this configuration, the cooling liquid 116 from the cooling liquid tank 118 flows into the bottom of the electrode support member 34A through the inlet tube 48A, spreads out while flowing upward inside the electrode support member 34A, and then flows into the cooling liquid tank 118 through the upper part of the electrode support member 34A and the outlet tube 50A.

Also, the negative electrode 24 may be made of a stainless mesh 140 (shown in Figs. 5(a) and 5(b), omitted in Fig. 5(b)) with about 40 mesh, for example, such that the negative electrode 24 functions as the radiation surface. It is preferable to dispose the stainless mesh 140 in the following manner so as to suppress thermal expansion thereof. That is, the electrode support member 34A is provided on its surface with a plurality of protrusions 142 at intervals in the width direction (the right-left direction in Figs. 5(a) and 5(b), a direction perpendicular to the sheet surface of Fig. 5(c)). The protrusions 142 extend straight from an upper end to a lower end of the electrode support member 34A. The stainless mesh 140 is disposed on the front side of the protrusions 142 and fixed thereto by a plurality of fixing members 144. It should be noted that the plurality of protrusions 142 may be disposed at intervals in the up-down direction on the surface of the electrode support member 34A.

The surface of the stainless mesh 140 is coated with a mixture of magnesium oxide powder, carbon fibers, and a small amount of binder, which mixture functions as an emission surface (the radiation surface) of the negative electrode 24. It should be noted that each surface of the stainless mesh 140 other than the radiation surface, i.e., a side surface thereof, a rear surface thereof, and upper and lower surfaces thereof, is preferably covered with a heat resistant electrical insulation layer.

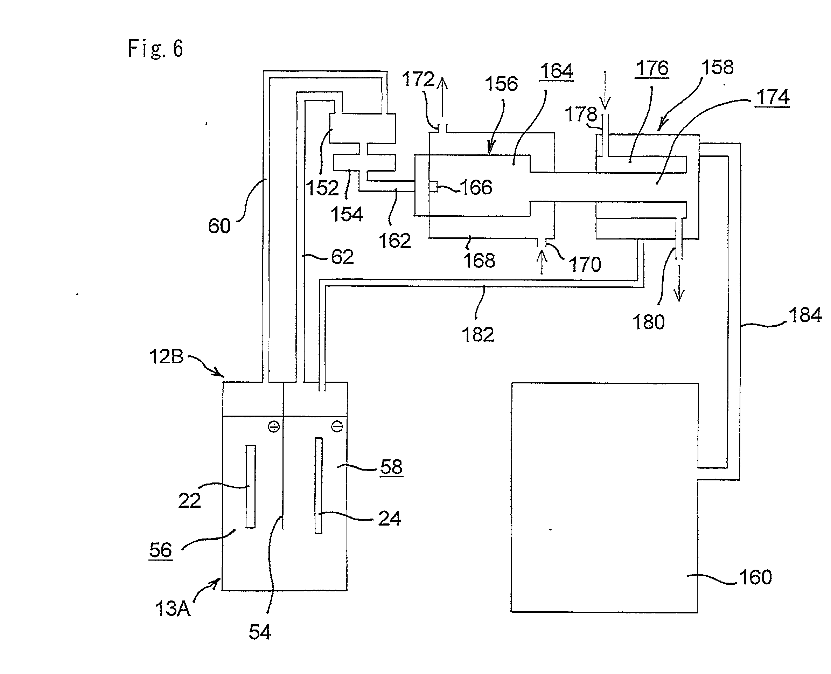

In the embodiment shown in Fig. 4, oxygen generated on the positive electrode 22 side is collected into the first collector tank 130, and hydrogen generated on the negative electrode 24 side is collected into the second collector tank 134. However, instead of this configuration, heat energy may be extracted by burning the oxygen and hydrogen as shown in Fig. 6.

In Fig. 6, a room-temperature fusion reaction device 12B according to this embodiment is provided with a mixer 152, a backfire preventer 154, a combustor 156, a combustion gas cooler 158, and a gas separator 160, in relation to the reaction vessel 13A. The mixer 152 is connected to the top of the first chamber 56 (chamber on the positive electrode 22 side) of the reaction vessel 13A of the room-temperature fusion reaction device 12B through the first outlet tube 60A (first discharge line) and also to the top of the second chamber (chamber on the negative electrode 24 side) of the reaction vessel 13A through the second outlet tube 62 (second discharge line).

The mixer 152 mixes the oxygen discharged through the first outlet tube 60 and the hydrogen discharged through the second outlet tube 62, and a mixture gas mixed by the mixer 152 is sent to the backfire preventer 154 where the mixture gas is cooled down to below the ignition temperature for preventing ignition. Thus cooled mixture gas is sent to the combustor 156 through a mixture gas supply tube 162 (mixture gas supply line).

The combustor 156 has a combustion chamber 164 and a combustion burner 164 disposed at an upstream end in the combustion chamber 164. The combustion burner 164 burns the mixture gas from the backfire preventer 154. The combustion chamber 164 of the combustor 156 is surrounded by a heat exchange chamber 168 (serving as a part of a heat utilizing means) having an inlet port 170. A heat medium (gas such as air, liquid such as water, for example) flows through the inlet port 170 and the heat exchange chamber 168, and then is discharged through an outlet port 172. The heat medium is heated by the combustion bas flowing through the combustion chamber 164 while flowing through the heat exchange chamber 168. By storing the heat medium inside a hot water tank (not shown) or the like as an example of the heat utilizing means, the heat medium can be used as hot water or circulation medium for heaters. Burning the oxygen generated on the positive electrode 22 side and the hydrogen generated on the negative electrode 24 side in this manner makes it possible to use heat energy and obtain heat output.

A combustion gas from the combustor 156 is sent to the combustion gas cooler 158. The combustion gas cooler 158 has a combustion gas chamber 174 through which the combustion gas flows and a cooling circulation chamber 176 surrounding the combustion gas chamber 174. A cooling medium such as water flows in through an inlet port 178, flows through the cooling circulation chamber 176, and flows out through an outlet port 180. On the other hand, the combustion gas from the combustion chamber 164 of the combustor 156 flows through the combustion gas chamber 174 while cooled down by the cooling medium flowing through the cooling circulation chamber 176.

Upon cooled down in the combustion gas chamber 174, moisture in the combustion gas condenses into water, and condensate water is returned into a reaction vessel 13A through a water return pipe 182 (a water return line). Also, the combustion gas cooled down within the combustion gas chamber 174 (with most moisture removed) is sent to the gas separator 160 through a combustion gas supply pipe 184 (a combustion gas supply line), separated into gas elements within the gas separator 160, and collected. Note that the combustion gas supplied to the gas separator 160 is rear gasses generated by the room-temperature fusion reaction, and is separated and collected by the gas separator 160 to prevent the rear gasses from diffusing into the atmosphere. It should be noted that rest of the configurations of the room-temperature fusion reaction device 12B (the reaction vessel 13A and configurations related thereto) of this embodiment may be substantially the same as those shown in Fig. 4.

Using the room-temperature fusion reaction device 12B having this configuration, it is possible to burn hydrogen and oxygen generated in the reaction vessel 13A and correct heat energy. Also, the gas separator 160 can collect the rear gasses generated by the room-temperature fusion reaction to prevent them from leaking into the atmosphere. Thus, it is possible to operate the room-temperature fusion reaction device 12B continuously and safely.

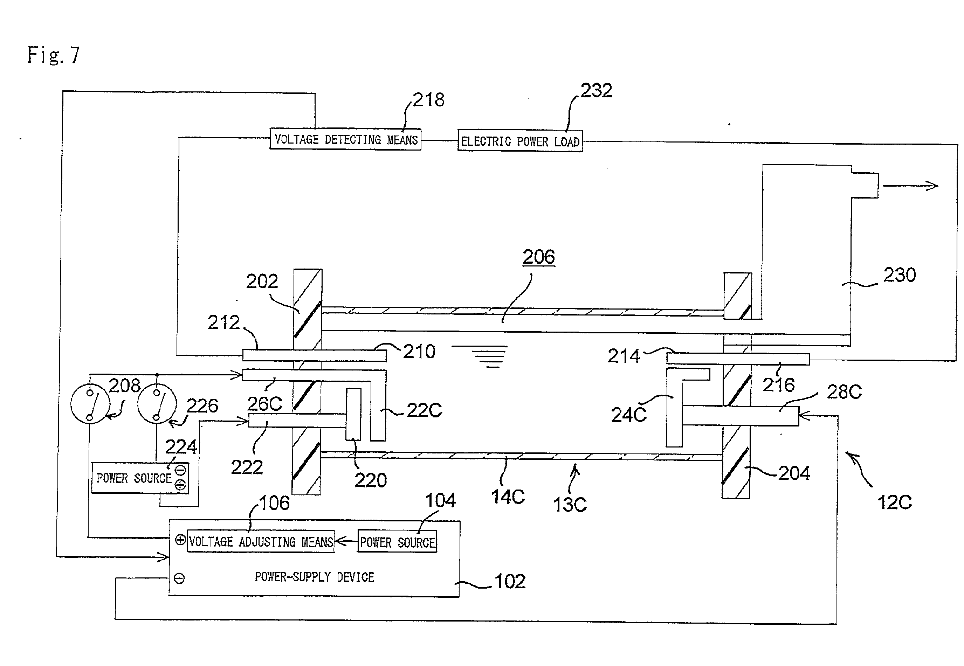

Next, a room-temperature fusion reaction device according to another embodiment will be described with reference to Fig. 7. In this embodiment, there is provided, in addition to a positive electrode (an acceleration positive electrode) and a negative electrode (an acceleration negative electrode) for inducing the room-temperature fusion reaction, an electrolysis positive electrode and an electrolysis negative electrode for electrolyzing electrolyte solution and a reference positive electrode and a reference negative electrode for detecting a room-temperature fusion status (a glow discharge optical emission status).

In Fig. 7, in a room-temperature fusion reaction device 12C of this embodiment, a reaction vessel 13C to be filled with electrolyte solution has a vessel main body 14C made of transparent silica glass. The vessel main body 14C has a hollow tubular shape with open sides. A first cover member 202 is disposed on one side of the vessel main body 14C, and a second cover member 204 is disposed on the other side thereof. The vessel main body 14C and the first and second cover members 202 and 204 together define a hermetically-sealed space 206. It should be noted that the first and second cover members 202 and 204 may be formed of heat-resistant electrical-insulation plastic, for example.

In this embodiment, a positive electrode 22C (the acceleration positive electrode) is disposed on one side (left side in Fig. 7) in the vessel main body 14C with its terminal area 26C extending through the first cover member 202 to the outside. Also, a negative electrode 24C (the acceleration negative electrode) is disposed on the other side (right side in Fig. 7) in the vessel main body 14C with its terminal area 28C extending through the second cover member 204 to the outside. The terminal area 26C of the positive electrode 22C and the terminal area 28C of the negative electrode 24C are connected to the power-supply device 102 (an acceleration power-supply device). The power-supply device 102 has the power source 104 and the voltage adjusting means 106. The power-supply device 102 has a positive-output terminal side electrically connected to the terminal area 26C of the positive electrode 22 through a first switch means 208 and a negative-output terminal side electrically connected to the terminal area 28C of the negative electrode 24C.

In relation to the positive electrode 22C (the acceleration positive electrode) and the negative electrode 24C (the acceleration negative electrode), a reference positive electrode 210 is disposed near the positive electrode 22C with its terminal area 212 extending through the first cover member 202 to the outside. Also, a reference negative electrode 214 is disposed near the negative electrode 24C with its terminal area 216 extending through the second cover member 204 to the outside. The reference positive electrode 210 and the reference negative electrode 214 are electrically connected to a voltage detecting means 218 which detects the voltage between the reference positive electrode 210 and the reference negative electrode 214.

In this embodiment, an output voltage of the power-supply device 102 (i.e., a reaction electric power applied to the positive electrode 22C and the negative electrode 24C) is controlled based on the voltage (a reference voltage) between the reference positive electrode 210 and the reference negative electrode 214, i.e., a detection voltage by the voltage detecting means 218. When the glow discharge optical emission state (the room-temperature fusion reaction state) becomes more active (or less active), the reference voltage between the reference positive electrode 210 and the reference negative electrode 214 becomes higher (or lower). That is, the detection voltage of the voltage detecting means 218 becomes higher (or lower). In this case, however, if the reaction voltage applied to the positive electrode 22C and the negative electrode 24C from the power-supply device 102 (more specifically, the voltage adjusting means 106) is controlled to be lower (or higher) based on the detection voltage, then the glow discharge optical emission states becomes less active (or more active). Thus, controlling the reaction voltage in this manner makes it possible to safely and continuously maintain the glow discharge optical emission state, i.e., the room-temperature fusion reaction state.

Also, in relation to the positive electrode 22C (the acceleration positive electrode) and the negative electrode 24C (the acceleration negative electrode), an electrolysis positive electrode 220 and an electrolysis negative electrode (in this embodiment, the positive electrode 22C functions also as the electrolysis negative electrode) are provided. The electrolysis positive electrode 220 is disposed in confrontation with the positive electrode 22C functioning as the electrolysis negative electrode with its terminal area 222 extending through the first cover member 202 to the outside. Also, a power source 224 for electrolysis is provided as a separate component from the power-supply device 102. The power source 224 has a negative output terminal side electrically connected to the terminal area 222 of the electrolysis positive electrode 220 and a negative output terminal side electrically connected to the terminal area 26C of the positive electrode 22C through a second switch means 226.

When the first switch means 208 is closed (turned ON), then the voltage (the reaction voltage) from the power-supply device 102 is applied to the positive electrode 22C (the acceleration positive electrode) and the negative electrode 24C (the acceleration negative electrode), and the glow discharge optical emission (the room-temperature fusion reaction) occurs between the electrodes 22C and 24C as described later. Also, when the second switch means 226 is closed (turned ON), then the voltage (electrolysis voltage) from the power source 224 is applied to the electrolysis positive electrode 220 and the positive electrode 22C (serving as the electrolysis negative electrode), and an electrolytic reaction occurs between the electrodes 220 and 22C.

The reaction vessel 13C is connected with a discharge member 230 through which gasses (oxygen, hydrogen, or the like) generated in the reaction vessel 13C are discharged to the outside. In relation to the discharge member 230, a flashback arrester, a combustor, a combustion gas cooling device, and a gas separator shown in Fig. 6 may be provided. In this case, cooled condensed liquids (condensate water) may be returned to the reaction vessel 13C, and cooled gasses may be separated and collected in the gas separator as described above.

In this embodiment, also, the reference positive electrode 210 and the reference negative electrode 214 function as a power-collection positive electrode and a power-collection negative electrode. That is, the terminal area 212 of the reference positive electrode 210 and the terminal area 216 of the reference negative electrode 214 are electrically connected to an electric power load 232. Being connected to the electric power load 232 in this manner, the reference positive electrode 210 and the reference negative electrode 214 function as the power-collection positive electrode and the power-collection negative electrode. In this case, the power collected by the reference positive electrode 210 and the reference negative electrode 214 is sent to and consumed at the electric power load 232, and electric power can be extracted from the glow discharge optical emission sate (the room-temperature fusion reaction state) and used.

In this room-temperature fusion reaction device 12C, first the second switch means 226 is closed, and then the second switch means 226 is opened. Then, the first switch means 208 is closed. As a result, the room-temperature fusion reaction is initiated. When the second switch means 226 is closed, the voltage (the electrolysis voltage) from the power source 224 is applied to the electrolysis positive electrode 230 and the positive electrode 22C (serving as the electrolysis negative electrode), and the electrolytic reaction occurs between the electrolysis positive electrode 230 and the positive electrode 22C.

If the second switch means 226 is opened and the first switch means 208 is closed several seconds (5 to 10 seconds, for example) after the electrolytic reaction started, then the voltage (the reaction voltage) from the power-supply device 102 is applied between the positive electrode 22C and the negative electrode 24C. As a result, the status shifts from the electrolytic reaction to the room-temperature fusion reaction, and the glow discharge optical emission occurs between the positive electrode 22C and the negative electrode 24C to establish the room-temperature fusion reaction state. Causing the electrolytic reaction at a preliminary step in this manner enables smooth shift to the glow discharge optical emission sate (i.e., the room-temperature fusion reaction state) in a short amount of time.

In this glow discharge optical emission state (the room-temperature fusion reaction state), the voltage between the reference positive electrode 210 and the reference negative electrode 214 is detected by the voltage detecting means 218, and the output voltage (the reaction voltage) from the power-supply device 102 is controlled based on the detection voltage (the reference voltage) from the voltage detecting means 218. When the glow discharge optical emission state, i.e., the room-temperature fusion reaction state becomes more active (or less active), then the detection voltage (the reference voltage) of the voltage detecting means 218 becomes larger (or smaller). In this case, controlling to lower (or increase) the reaction voltage applied to the positive electrode 22C and the negative electrode 24C from the power-supply device 102 makes the glow discharge optical emission state less active (or more active). Thus, it is possible to maintain the glow discharge optical emission state, i.e., the room-temperature fusion reaction state, continuously and safely by controlling the reaction voltage in this manner.

In the above-described embodiment, the power-supply device 102 for applying to the positive electrode 22C (the acceleration positive electrode) and the negative electrode 24C (the acceleration negative electrode) is provided separately from the power source 224 for applying to the electrolysis positive electrode 220 and the electrolysis negative electrode (the positive electrode 22C functions as the electrolysis negative electrode). However, the power-supply device 102 may be configured such that its output voltage can be switched between the reaction voltage and the electrolysis voltage. In this case, the electrolysis voltage from the power-supply device 102 is applied to the electrolysis positive electrode and the electrolysis negative electrode, and the reaction voltage from the power-supply device 102 is applied to the positive electrode 22C and the negative electrode 24C.

Also, in the above-described embodiment, the positive electrode 22C functions as the electrolysis negative electrode, and the electrolysis voltage is applied between the electrolysis positive electrode 220 and the positive electrode 22C to cause the electrolytic reaction. However, a different electrolysis negative electrode may be provided in confrontation with the electrolysis positive electrode 220.

Also, in the above-described embodiment, the reference positive electrode 210 and the reference negative electrode 214 are disposed near the positive electrode 22C (the acceleration positive electrode) and the negative electrode 24C (the acceleration negative electrode), and the reference positive electrode 210 and the reference negative electrode 214 function as the power-collection positive electrode and the power-collection negative electrode. However, configurations are not limited to these configurations. In addition to the reference positive electrode 210 and the reference negative electrode 214, different power-collection positive electrode and power-collection negative electrode may be provided near the positive electrode 22C and the negative electrode 24C.

While room-temperature fusion reaction methods and devices according to the embodiment of the invention have been described, the invention is not limited thereto, and various changes and modifications may be made without departing from the spirit of the invention.

### Examples

The following experiment was conducted to confirm occurrence of the room-temperature fusion reaction. This experiment was conducted with the room-temperature fusion reaction device of the embodiment shown in Fig. 7, electrolyte solution obtained by dissolving 0.1 mol sodium carbonate (Na₂CO₃) as an electrolytic substance into mixture of distilled water (95%) and heavy water (5%), and a tubular reaction vessel having 7 cm diameter and 30 cm length. The reaction vessel was filled with 1 liter of the electrolyte solution. The positive electrode (the acceleration positive electrode) was located 15 cm away from the negative electrode (the acceleration negative electrode). The electrolysis positive electrode was located 0.5 cm away from the positive electrode (the electrolysis negative electrode).

First, in order to cause the electrolytic reaction, a voltage of 2V at 1A (electrolysis voltage) was applied between the electrolysis positive electrode and the positive electrode (the electrolysis negative electrode) for 5 seconds. Then, in order to shift to the room-temperature fusion reaction, a voltage of 250V at 1A (reaction voltage) was applied between the positive electrode (the acceleration positive electrode) and the negative electrode (the acceleration negative electrode). Upon application of this reaction voltage, the electrolyte solution became milky starting from near the negative electrode. Numerous tiny sparks were generated in the entire region between the positive electrode and the negative electrode to shift into the glow discharge optical emission state, and the electric current dropped to 0.1A. Maintaining the glow discharge optical emission state for several seconds brought the electrolyte solution in the reaction vessel to a vigorous boil. Keeping the electrolyte solution boiling vigorously for 5 to 6 seconds rapidly lowers the liquid level through evaporation, and the positive electrode and the negative electrode were exposed out of the electrolyte solution. Lowering the reaction voltage to 50V in this condition calms the glow discharge optical emission state and restored the initial condition in the reaction vessel.

An evaporation amount of the electrolyte solution was measured to be about 150 cc after the experiment, and this evaporation amount is equivalent to electric power of 60 kW·h. The electric power obtained from the reference positive electrode and the reference negative electrode was 200V at 10A, and an electric power output of 2 kW·h was obtained. Taking into this state and the generated amount of energy, it is conceived that room-temperature fusion reaction occurred.

## Claims

1. A room-temperature fusion reaction method comprising:
placing a positive electrode and a negative electrode in an electrolyte solution within a reaction vessel;
applying a reaction voltage to the positive electrode and the negative electrode to cause a glow discharge optical emission between the positive electrode and the negative electrode;
receiving a light of the glow discharge optical emission by a light receiving means; and
controlling the voltage based on a receiver output of the light receiving means, thereby maintaining a glow discharge optical emission state.

2. The room-temperature fusion reaction method according to claim 1, wherein the light receiving means is disposed to the reaction vessel by a transparent member, and the light receiving means receives the light of the glow discharge optical emission between the positive electrode and the negative electrode through the transparent member.

3. The room-temperature fusion reaction method according to claim 1 or 2, wherein:
a combustion burner for burning a gas, a heat utilizing means for utilizing an exhaust heat, and a combustion gas cooling means for cooling down a combustion gas are provided in relation to the reaction vessel;
a gas generated near the positive electrode or the negative electrode is led to the outside the reaction vessel and burned by the combustion burner;
a combustion heat of the combustion gas is utilized by the heat utilizing means;
the combustion gas after a heat usage is cooled down by the combustion gas cooling means;
a cooled and liquefied liquid is returned into the reaction vessel; and
a cooled gas is collected by a gas collector.

4. The room-temperature fusion reaction method according to any one of claims 1 to 3, wherein a power-collection positive electrode and a power-collection negative electrode for collecting power are disposed near the positive electrode and the negative electrode, and an energy generated in the room-temperature fusion reaction state is extracted outside as an electric power by using the power-collection positive electrode and the power-collection negative electrode.

5. A room-temperature fusion reaction method comprising:
placing a positive electrode and a negative electrode in an electrolyte solution within a reaction vessel;
placing a reference positive electrode and a reference negative electrode for detecting a voltage of the electrolyte solution near the positive electrode and the negative electrode;
applying a reaction voltage to the positive electrode and the negative electrode to cause a glow discharge optical emission between the positive electrode and the negative electrode;
detecting a voltage of the electrolyte solution in this glow discharge optical emission state with the reference positive electrode and the reference negative electrode; and
controlling the reaction voltage based on a reference voltage between the reference positive electrode and the reference negative electrode, thereby maintaining the glow discharge optical emission state.

6. A room-temperature fusion reaction device comprising:
a reaction vessel for containing an electrolyte solution;
a positive electrode and a negative electrode immersed in the electrolyte solution inside the reaction vessel; and
a power-supply device for applying a reaction voltage to the positive electrode and the negative electrode, wherein:
the reaction voltage from the power-supply device is applied so as to cause a glow discharge optical emission between the positive electrode and the negative electrode;
a light receiving means for receiving a light of a glow discharge optical emission state is provided;
the power-supply device includes a voltage adjusting means for adjusting a voltage from a power source, the voltage adjusting means controlling the reaction voltage applied to the positive electrode and the negative electrode based on a receiver output of the light receiving means, thereby maintaining the glow discharge optical emission state between the positive electrode and the negative electrode.

7. A room-temperature fusion reaction device comprising:
a reaction vessel for containing an electrolyte solution;
a positive electrode and a negative electrode immersed in the electrolyte solution inside the reaction vessel; and
a power-supply device for applying a reaction voltage to the positive electrode and the negative electrode, wherein:
the reaction voltage from the power-supply device is applied so as to cause a glow discharge optical emission between the positive electrode and the negative electrode;
a reference positive electrode and a reference negative electrode are disposed near the positive electrode and the negative electrode;
the power-supply device includes a voltage adjusting means for adjusting a voltage from a power source;
the reference positive electrode and the reference negative electrode detect a voltage of the electrolyte solution in the glow discharge optical emission state; and
the voltage adjusting means controls the reaction voltage applied to the positive electrode and the negative electrode based on a reference voltage between the reference positive electrode and the reference negative electrode, thereby maintaining the glow discharge optical emission state between the positive electrode and the negative electrode.
